# EUROPÄISCHE PATENTSCHRIFT

(11) **EP 0 970 985 B1**
(45) Veröffentlichungstag und Bekanntmachung des Hinweises auf die Patenterteilung: **29.07.2009**
(21) Anmeldenummer: 99111696.3
(22) Anmeldetag: 15.06.1999
(51) Int. Cl.: C08J 3/00, C09K 21/00, C08K 9/06

(54) **Oberflächenmodifizierte Flammschutzmittel, Verfahren zu deren Herstellung sowie deren Verwendung**
Surface modified flame retardants, process for their preparation and use thereof
Ignifuges modifiés en surface, leur procédé de préparation et leur utilisation

(30) Priorität: 06.07.1998 DE 19830128
(43) Veröffentlichungstag der Anmeldung: 12.01.2000
(73) Patentinhaber: Evonik Degussa GmbH, 45128 Essen (DE); Chemische Fabrik Budenheim KG, 55257 Budenheim (DE)
(72) Erfinder: Barfurth, Dieter, 79618 Rheinfelden (DE); Mack, Helmut, Dr., 79618 Rheinfelden (DE); Götzmann, Karl, 55257 Budenheim (DE); Mans, Vincente, 08915 Badalona (ES); Nägerl, Hans-Dieter, Dr., 67373 Dudenhofen (DE); Sommer, Klaus, Prof. Dr., 67098 Bad Dürkheim (DE)

(56) Entgegenhaltungen:
- WO-A-98/08898
- DATABASE WPI Section Ch, Week 199129 Derwent Publications Ltd., London, GB; Class A26, AN 1991-210606 XP002119247 & JP 03 131508 A (CHISSO CORP), 5. Juni 1991 (1991-06-05)

## Beschreibung

Gegenstand der vorliegenden Erfindung ist ein Verfahren zur Modifizierung der Oberfläche von Flammschutzmittel durch Umhüllen der Teilchen mit einem siliciumhaltigen Coatingmittel, entsprechende Flammschutzmittel als solche sowie deren Verwendung.

Es ist bekannt, Ammoniumphosphate, Ammoniumpolyphosphate, Melaminphosphate, Melaminborate und Melamincyanurate als halogenfreie Flammschutzmittel, z. B. für Kunststoffe, zu verwenden.

EP 0 584 567 A1 offenbart eine flammwidrige Kunststofformmasse aus Olefinpolymeren und einem Flammschutzsystem aus Ammoniumpolyphosphat und einem Polykondensat aus Tris(2-hydroxyethyl)-isocyanurat und einer aromatischen Polycarbonsäure.

In der DE-OS 33 16 880 wird ein Verfahren zur Herstellung von hydrolysestabilen, wasserunlöslichen Ammoniumpolyphosphaten durch Coating mit Melamin-Formaldehyd- bzw. Phenol-Formaldehydharzen beschrieben.

Ferner ist der EP 0 180 790 A1 ein gecoatetes, pulverförmiges Ammoniumpolyphosphat zu entnehmen, bei dem zur Umhüllung Polyharnstoff, d. h. ein Reaktionsprodukt aus Isocyanat und Wasser verwendet wird.

Obwohl beispielsweise Ammoniumpolyphosphate solchen Kunststoffen einen guten Flammschutz verleihen, ist es von Nachteil, daß sie im Laufe der Kunststoffgebrauchsdauer aus dem Kunststoff migrieren sowie durch Umwelteinflüsse, wie Feuchtigkeit, ausgewaschen werden, da vor allem unbehandelte Ammoniumpolyphosphate, aber auch andere Phosphorsäurederivate noch eine beträchtliche Wasserlöslichkeit aufweisen.

Aus WO98/08898 gehen mit Silan behandelte Flammschutzmittel für verschiedene Polymere hervor. WO 98/08898 lehrt gemäß Beispiel 1 eine Behandlung von Melaminpyrophosphat in einem Plastikbeutel durch wiederholtes Besprühen mit einer ethanolischen Lösung von Octyltriethoxysilan und jeweils anschließendem Schütteln sowie einer nachfolgenden Trocknung.

Auch gehärtete Siliconharze sind schon als Coatingmaterial beschrieben worden. So lehrt die JP-OS 3-131 508 die Umhüllung von Ammoniumpolyphosphat in einer Aufschlämmung in einem organischen Lösemittel mit einem aushärtenden Siliconharz, wobei geringe Mengen eines Aminotriethoxysilans als Härter eingesetzt werden.

Allen diesen Verfahren ist jedoch gemein, daß die Herstellung so oberflächenbehandelter Flammschutzmittel sehr aufwendig ist und das Produkt dadurch merklich verteuert wird. Daneben entstehen Umweltprobleme durch den Gebrauch wenig umweltverträglicher Lösemittel sowie dabei anfallender Abwässer und Reststoffe.

Insbesondere bestand das Problem in der Bereitstellung von Alternativen.

Die gestellte Aufgabe wird erfindungsgemäß entsprechend den Angaben der Patentansprüche gelöst.

Überraschenderweise wurde gefunden, daß oberflächenmodifizierte Flammschutzmittel in einfacher, wirtschaftlicher und gleichzeitig umweltfreundlicher Weise erhältlich sind, indem man ein organofunktionelles Silan oder eine Mischung organofunktioneller Silane oder ein oligomeres Organosiloxan oder eine Mischung oligomerer Organosiloxane oder eine lösemittelhaltige Zubereitung auf der Basis monomerer Organosilane und/oder oligomerer Organosiloxane oder eine Zubereitung auf der Basis wasserlöslicher Organopolysiloxane auf ein pulverförmiges Flammschutzmittel aufbringt und das Flammschutzmittel während des Coatings in Bewegung hält, wobei man das Verfahren in strömender Luft oder Inertgas durchführt.

Geeigneterweise wird dabei das Coatingmittel direkt in ein fluidisiertes Bett des zu behandelnden Flammschutzmittels getropft, eingedüst oder aufgesprüht, wobei das Coatingmittel in der Regel mit der Oberfläche des Flammschutzmittels reagiert und so die Teilchen umhüllt. Dabei können Kondensationswasser sowie gegebenenfalls geringe Mengen Alkohol durch Kondensation oder Hydrolyse entstehen, die mit der Prozeßabluft in an sich bekannter Weise einer Abluftreinigung, z. B. einer Kondensation oder einer katalytischen oder thermischen Nachverbrennung, zugeführt werden.

Besonders vorteilhaft, da wirtschaftlich und umweltfreundlich, ist der Einsatz einer wäßrigen Zubereitung auf Basis wasserlöslicher Organopolysiloxane, denn in die Prozeßabluft entweicht nahezu ausschließlich Wasser. Ferner kann auf eine Exschutzausführung der Anlage verzichtet werden. Darüber hinaus fallen bei der vorliegenden Verfahrensweise keine Filtrationsrückstände und kein Waschwasser an.

Gegenstand der vorliegenden Erfindung ist daher ein Verfahren zur Modifizierung der Oberfläche von Flammschutzmittel durch Umhüllen der Teilchen mit einem siliciumhaltigen Coatingmittel, das dadurch gekennzeichnet ist, daß man ein organofunktionelles Silan oder eine Mischung organofunktioneller Silane oder ein oligomeres Organosiloxan oder eine Mischung oligomerer Organosiloxane oder eine lösemittelhaltige Zubereitung auf der Basis monomerer Organosilane und/oder oligomerer Organosiloxane oder eine Zubereitung auf der Basis wasserlöslicher Organopolysiloxane auf ein pulverförmiges Flammschutzmittel aufbringt und das Flammschutzmittel während des Coatings in Bewegung hält, wobei man das Verfahren in strömender Luft oder Inertgas durchführt.

Beim erfindungsgemäßen Verfahren setzt man vorzugsweise 0,05 bis 10 Gew.-%, besonders vorzugsweise 0,1 bis 3 Gew.-%, ganz besonders vorzugsweise 0,5 bis 1,5 Gew.-%, an siliciumhaltigem Coatingmittel, bezogen auf die Menge an Flammschutzmittel ein.

Insbesondere bringt man das Coatingmittel im Laufe von 10 Sekunden bis 2 Stunden bei einer Temperatur von 0 bis 200 °C, vorzugsweise im Laufe von 30 Sekunden bis 10 Minuten bei einer Temperatur von 20 bis 100 °C, besonders vorzugsweise im Laufe von 1 bis 3 Minuten bei einer Temperatur von 30 bis 80°C, auf.

Geeigneterweise behandelt man beim erfindungsgemäßen Verfahren das mit Coatingmittel umhüllte Flammschutzmittel unter Wärmeeinwirkung oder unter vermindertem Druck oder unter vermindertem Druck bei gleichzeitiger Wärmeeinwirkung nach.

Bevorzugt erfolgt eine solche Nachbehandlung des mit Coatingmittel umhüllten Flammschutzmittels bei einer Temperatur von 0 bis 200 °C, besonders vorzugsweise bei einer Temperatur von 80 bis 150 °C, ganz besonders vorzugsweise bei einer Temperatur von 90 bis 120 °C.

Das erfindungsgemäße Verfahren wird in strömender Luft oder in strömendem Inertgas, beispielsweise Stickstoff, Kohlendioxid, durchgeführt.

Ferner kann man das erfindungsgemäße Verfahren derart ausführen, daß man das Coating und gegebenenfalls eine anschließende Trocknung des umhüllten Flammschutzmittels einmal oder mehrmals wiederholt.

Vorzugsweise setzt man beim erfindungsgemäßen Verfahren Flammschutzmittel mit einer durchschnittlichen Korngröße (d₅₀-Wert) von 1 bis 100 µm, besonders vorzugsweise von 2 bis 25 µm, ganz besonders vorzugsweise von 5 bis 15 µm ein. Geeigneterweise ist ein solches pulverförmiges Flammschutzmittel trocken, d. h. rieselfähig

Bevorzugt werden beim erfindungsgemäßen Verfahren folgende Flammschutzmittel eingesetzt:
Ammoniumorthophosphate, z. B. NH₄H₂PO₄, (NH₄)₂HPO₄ oder deren Mischungen (z. B. FR CROS^{®} 282, FABUTIT^{®} 747 S), Ammoniumdiphosphate, z. B. NH₄H₃P₂O₇, (NH₄)₂H₂P₂O₇, (NH₄)₃HP₂O₇, (NH₄)₄P₂O₇ oder Mischungen daraus (z. B. FR CROS^{®} 134), Ammoniumpolyphosphate, wie sie insbesondere, aber nicht ausschließlich, aus J. Am. Chem. Soc. 91, 62 (1969) hervorgehen, z. B. solche mit Kristallstrukturphase 1 (z. B. FR CROS^{®} 480), mit Kristallstrukturphase 2 (z. B. FR CROS^{®} 484) oder deren Mischungen (z. B. FR CROS^{®} 485), Melaminorthophosphate, z. B. C₃H₆N₆•H₃PO₄, 2 C₃H₆N₆•H₃PO₄, 3 C₃H₆N₆·2 H₃PO_{4,} C₃H₆N₆·H₃PO₄, Melamindiphosphate, z. B. C₃H₆N₆·H₄P₂O₇. 2 C₃H₆N₆·H₄P₂O₇. 3 C₃H₆N₆·H₄P₂O₇ oder 4 C₃H₆N₆·H₄P₂O₇, Melaminpolyphosphate, Melaminborate, z. B. BUDIT^{®} 313, Melamincyanurat, z. B. BUDIT^{®} 315, Melaminborophosphate, Melamin-1.2-phthalate, Melamin-1.3-phthalate, Melamin-1.4-phthalate sowie Melaminoxalate.

Als organofunktionelle Silane werden beim erfindungsgemäßen Verfahren bevorzugt aminoalkyl- oder epoxyalkyl- oder acryloxyalkyl- oder methacryloxyalkyl- oder mercaptoalkyl- oder alkenyl- oder alkylfunktionelle Alkoxysilane eingesetzt, wobei zuvor genannte Kohlenwasserstoffeinheiten geeigneterweise 1 bis 8 C-Atome enthalten und die Alkylgruppen in linearer, verzweigter oder cyclischer Form vorliegen können. Besonders bevorzugte organofunktionelle Alkoxysilane sind:
3-Aminopropyl-trialkoxysilane, 3-Aminopropyl-methyl-dialkoxysilane, 3-Glycidyloxypropyl-trialkoxysilane, 3-Acryloxypropyl-trialkoxysilane, 3-Methacryloxypropyl-trialkoxysilane, 3-Mercaptopropyl-trialkoxysilane, 3-Mercaptopropyl-methyl-dialkoxysilane, Vinyltrialkoxysilane, Vinyltris(2-methoxy-ethoxy)silan, Propyltrialkoxysilane, Butyltrialkoxysilane, Pentyltrialkoxysilane, Hexyltrialkoxysilane, Heptyltrialkoxysilane, Octyltrialkoxysilane, Propyl-methyl-dialkoxysilane, Butyl-methyl-dialkoxysilane, und die Alkoxygruppen insbesondere Methoxy-, Ethoxy- oder Propoxygruppen sind.

Als oligomere Organosiloxane können beim erfindungsgemäßen Verfahren solche eingesetzt werden, wie sie insbesondere aus EP 0 518 057 A1 sowie DE 196 24 032 A1 hervorgehen. Bevorzugt werden beim vorliegenden Verfahren solche eingesetzt, die als Substituenten (i) Alkyl- und Alkoxygruppen, insbesondere lineare, verzweigte oder cyclische Alkylgruppen mit 1 bis 24 C-Atomen und Alkoxygruppen mit 1 bis 3 C-Atomen, oder (ii) Vinyl- und Alkoxygruppen und gegebenenfalls Alkylgruppen, insbesondere Alkoxygruppen mit 1 bis 3 C-Atomen und gegebenenfalls lineare, verzweigte oder cyclische Alkylgruppen mit 1 bis 24 C-Atomen tragen, wobei besagte oligomere Organoalkoxysiloxane vorzugsweise einen Oligomerisierungsgrad von 2 bis 50, besonders bevorzugt von 3 bis 20, aufweisen.

Besonders bevorzugt werden hierbei oligomere, vinylfunktionelle Methoxysiloxane, beispielsweise DYNASYLAN^{®} 6490, oder oligomere, propylfunktionelle Methoxysilane, beispielsweise DYNASYLAN^{®} BSM 166, eingesetzt.

Geeigneterweise kann man beim erfindungsgemäßen Verfahren auch eine lösemittelhaltige Zubereitung auf der Basis monomerer Organoalkoxysilane und/oder oligomerer Organoalkoxysiloxane einsetzen, wobei diese vorzugsweise Methanol, Ethanol, n-Propanol, Isopropanol und/oder Wasser als Lösemittel enthält. Solche lösemittelhaltigen Zubereitungen können auch Emulgatoren enthalten.

Beim erfindungsgemäßen Verfahren kann man besonders vorteilhaft Zubereitungen auf der Basis wasserlöslicher Organopolysiloxane einsetzen, wie sie insbesondere aus EP 0 716 127 A2, EP 0 716 128 A2, EP 0 675 128 A1 und DE 196 39 782 A1 hervorgehen.

Bevorzugt setzt man beim erfindungsgemäßen Verfahren eine Zubereitung auf der Basis wasserlöslicher Organopolysiloxane ein, wobei die Organopolysiloxane neben OH-Gruppen mindestens eine Aminoalkyl-funktionelle Gruppe und gegebenenfalls mindestens eine weitere funktionelle Gruppe aus der Reihe Alkyl, insbesondere n-Alkyl mit 1 bis 8 C-Atomen, Alkenyl, insbesondere Vinyl, Glycidyletheralkyl, Methacryloxyalkyl, Mercaptoalkyl enthalten und an jedem Siliziumatom der Organopolysiloxane eine organofunktionelle Gruppe gebunden ist und der durchschnittliche Oligomerisierungsgrad der Organopolysiloxane 2 bis 50, besonders bevorzugt 3 bis 20, beträgt.

Besonders vorzugsweise setzt man beim erfindungsgemäßen Verfahren eine wäßrige Zubereitung ein, die einen Gehalt an einem Alkohol von weniger als 0,5 Gew.-%, bezogen auf die gesamte Zubereitung, und einen pH-Wert von 2 bis 6 oder 8 bis 12 aufweist.

Ganz besonders vorzugsweise setzt man hierbei eine wasserbasierende Zubereitung praktisch vollständig hydrolysierter Organopolysiloxane ein, wobei die Organopolysiloxane als funktionelle Gruppen insbesondere 3-Aminopropyl- und Vinylgruppen enthalten und jedes Siliciumatom der Organopolysiloxane eine organofunktionelle Gruppe trägt, beispielsweise DYNASYLAN® HS 2907.

Im allgemeinen kann man das erfindungsgemäße Verfahren wie folgt ausführen:

Das in der Regel flüssige Coatingmittel kann direkt in ein durch Zufuhr eines Gases fluidisiertes Bett aus pulverförmigem Flammschutzmittel, wie z. B. Ammoniumpolyphosphat, eingebracht werden.

Üblicherweise werden dabei die Teilchen des Flammschutzmittels mit Coatingmittel umhüllt, wobei das Coatingmittel mit der Oberfläche des Flammschutzmittels reagiert und Hydrolysealkohol bzw. Kondensationswasser freigesetzt werden kann.

Das so behandelte Flammschutzmittel wird nach dem Aufbringen des Coatingmittel gegebenenfalls bei einem nachfolgenden Mischvorgang vom noch anhaftenden Hydrolysealkohol bzw. Kondensationswasser befreit, z. B. durch Zufuhr trockener warmer Luft sowie einer Verminderung des Drucks.

Während bei den bisher bekannten Coatingverfahren in einem organischen Lösemittel gearbeitet wird, sind bei dem erfindungsgemäßen Verfahren im allgemeinen keinerlei aufwendig zu handhabende oder besonders umweltbelastende Hilfsmittel erforderlich.

Ferner kann das vorliegende Verfahren auch folgende Verfahrenspraktiken beinhalten:

Das Flammschutzmittel, welches gecoatet werden soll, in einem geeigneten Aggregat in ein fluidisiertes Bett zu überführen. - Dies kann beispielsweise ein mehr oder weniger schnellaufender Mischer oder ein ähnlicher Apparat sein, wobei das eingebrachte pulverförmige Flammschutzmittel ständig in Bewegung ist und ein ununterbrochener Kontakt der einzelnen Partikel zueinander erfolgt. Dem Aggregat wird Luft oder ein Inertgas, z. B. Stickstoff oder CO₂, zugeführt, wobei das Gas gegebenenfalls vorgeheizt ist. Ferner kann man ein beheizbares Aggregat einsetzen.

Das Coatingmittel in möglichst gleichmäßiger Verteilung in das fluidisierte Material einzubringen. - Dies kann durch Eindüsen oder Tropfen oder Sprühen des Coatingmittels in das fluidisierte Material erfolgen.

Die Menge des aufzubringenden Coatingmittels richtet sich im allgemeinen nach dem Einsatzzweck des zu coatenden Flammschutzmittels und ist meist abhängig von der Größe der spezifischen Oberfläche des zu coatenden Flammschutzmittels sowie der Menge des zu beschichtenden Flammschutzmittels, wobei man z. B. das Verhältnis der spezifischen Oberfläche des Flammschutzmittels zur spezifischen Netzfläche des Coatingmittels für eine "monomolekulare Bedeckung" als Richtwert annehmen kann.

Nach dem erfindungsgemäßen Verfahren sind oberflächenmodifizierte Flammschutzmittel nicht nur in einfacher, wirtschaftlicher und umweltfreundlicher Weise erhältlich, sondern weisen gegenüber unbehandelten oder mit anderen Beschichtungsmitteln behandelten Flammschutzmitteln auch eine geringere Wasserlöslichkeit und vorteilhafte Eigenschaften bei der Weiterverarbeitung in Polymermassen auf, wie z. B. die Möglichkeit der Zugabe größerer Mengen des Flammschutzmittels (Füllgrad), der leichteren Einarbeitbarkeit und einer geringeren Beeinflussung der physikalischen Daten.

Gegenstand der vorliegenden Erfindung sind ebenfalls oberflächenmodifizierte Flammschutzmittel, die nach dem erfindungsgemäßen Verfahren erhältlich sind.

Die nach dem erfindungsgemäßen Verfahren oberflächenmodifizierten sowie stabilisierte Flammschutzmittel können mit besonders vorteilhafter Wirkung in viele brennbare Polymere eingearbeitet werden, beispielsweise in Polyolefine, wie Polyethylen, Polypropylen, Polystyrol und dessen Copolymerisate, wie ABS, SAN, gesättigte oder ungesättigte Polyester, Polyamide. Epoxidharze, Phenolharze, Furanharze, Polyurethane sowie natürliche oder künstliche Kautschuke.

Erfindungsgemäß oberflächenmodifizierte Flammschutzmittel können aber auch in vorteilhafter Weise zur intumeszierenden Beschichtung brennbarer Materialien verwendet werden.

Auch brennbare Naturstoffe, wie Holz, Spanplatten oder Papier, können mit den erfindungsgemäß erhältlichen Flammschutzmitteln flammwidrig oder flammfest ausgerüstet oder mit einer Dispersion, die die erfindungsgemäßen Flammschutzmittel enthält, intumeszierend beschichtet werden.

Vorteilhaft ist auch die Halogenfreiheit der erfindungsgemäßen Flammschutzmittel, die damit die zunehmenden Anforderungen des Marktes nach der Umweltfreundlichkeit der daraus hergestellten Produkte erfüllen.

Somit ist auch Gegenstand der vorliegenden Erfindung die Verwendung erfindungsgemäßer Flammschutzmittel in Polymercompounds und zur Flammwidrigausstattung brennbarer Naturstoffe.

Die nachfolgenden Beispiele dienen der näheren Erläuterung der vorliegenden Erfindung, ohne den Gegenstand der Erfindung zu beschränken:

### Beispiel 1 (nicht erfindungsgemäß)

Ein Pflugscharmischer (Bauart LÖDIGE) mit einem Mischraumvolumen von 3 Litern wurde mit 1 832 g Ammoniumpolyphosphat beschickt, verschlossen und das Mischwerk in Gang gesetzt. Die Drehzahl betrug 200 U/min, und die Mischwerkzeuge brachten das eingebrachte Pulver in lebhafte Bewegung. Über eine Öffnung im Deckel des Mischer-Mischraums wurden innerhalb von einer Minute 18,5 g eines oligomeren Propylmethoxysiloxans (DYNASYLAN^{®} BSM 166) in den Mischraum gegeben. Nach Beendigung der Zugabe des Coatingmittels wurde 60 Minuten gemischt. Anschließend wurde das Ammoniumpolyphosphat aus dem Mischer entnommen und das oberflächenbehandelte Material in zwei Teile aufgeteilt. Eine Hälfte wurde 24 Stunden an der Luft getrocknet, die andere 2 Stunden bei 90 °C in einem Umlufttrockenschrank bei 20 % Frischluftzufuhr. Beide Teile zeigten nach der Trocknung eine geringfügige Gewichtsabnahme: luftgetrocknet 0,04 Gew.-%, ofengetrocknet 0,10 Gew.-%.

Zur Prüfung des gecoateten Flammschutzmittels wurde das Absinkverhalten in Wasser ermittelt (Flotationstest):

In große Reagensgläser werden jeweils 70 ml entsalztes Wasser eingefüllt. Auf die Wasseroberfläche wird das zu prüfende Flammschutzmittel mittels Spatel aufgegeben: eine Spatelspitze, ca. 50 - 200 mg (je nach Schüttgewicht des Flammschutzmittels). Die Stoppuhr wird in Gang gesetzt und geschätzt, wieviel von der aufgegebenen Flammschutzmittelmenge nach 15 Sekunden zum Boden des Reagensglases abgesunken ist. Nach einer Minute wird das Reagensglas 1 bis 2 Sekunden geschüttelt und sofort anschließend eine weitere Schätzung der abgesunkenen Menge vorgenommen. Die Schätzung der abgesunkenen Flammschutzmittelmenge wird nach 5 Minuten und nach 18 Stunden Gesamt-Prüfdauer wiederholt.

Folgende Ergebnisse wurden mit dem nach Beispiel 1 oberflächenmodifizierten Ammoniumpolyphosphat gegenüber unbehandeltem Ammoniumpolyphosphat erhalten:

**Tabelle 1**

| Oberflächenbehandlung | Aufgegebene Menge in mg | Anteil abgesunkenen Flammschutzmittels in % nach | | | |
|---|---|---|---|---|---|
| | | 15 sec | 60 sec (+ Schütteln) | 5 min | 18 h |
| ohne | 190 | 95 | 100 | 100 | 100 |
| 1 % (ofengetrocknet) | 170 | 0 | 0 | 0 | 10 |
| 1% (luftgetrocknet) | 160 | 0 | < 5 | 5 | 20 |

Aus Tabelle 1 ist zu entnehmen, daß durch die Behandlung mit dem Coatingmittel die Benetzbarkeit durch Wasser deutlich beeinflußt wird, d. h. die Hauptanteile des behandelten Produkts sind so stark hydrophobiert, daß sie auf der Wasseroberfläche schwimmen.

Diese hydrophoben Oberflächeneigenschaften des Flammschutzmittels bewirken beim Einarbeiten in eine Polymermatrix, insbesondere bei Polyolefinen, eine verbesserte Verträglichkeit mit dem Polymer (erhöhte Ähnlichkeit mit den Polymerketten).

Das gecoatete Flammschutzmittel wurde außerdem auf seine Verträglichkeit mit Wasser in der Art getestet (Dispergiertest), daß versucht wurde, eine Dispersion in Wasser mit 75 % Festkörperanteil herzustellen und die Viskosität dieser Dispersion mit einem Rotationsviskosimeter (Typ BROOKFIELD) zu messen. Die folgende Tabelle 2 zeigt die Ergebnisse:

**Tabelle 2**

| Oberflächenbehandlung | Dispergiermedium | Viskosität einer 3:1-MischungAPP/Wasser in mPa s |
|---|---|---|
| ohne | Wasser | 600 |
| gemäß Beispiel 1 luftgetrocknet | Wasser | nicht meßbar, pastös! |
| gemäß Beispiel 1 ofengetrocknet | Wasser | nicht meßbar, pastös! |

Auch aus Tabelle 2 geht die ausgeprägte Hydrophobierung des gecoateten Produkts deutlich hervor. Das unbehandelte Produkt läßt sich wegen seiner hydrophilen Oberfläche leicht in Wasser suspendieren, während die gecoateten Proben mit Wasser nur noch eine Paste ergeben.

### Beispiel 2 (nicht erfindungsgemäß)

Ein beheizbarer Pflugscharmischer (Bauart LÖDIGE) mit einem Mischraumvolumen von 3 Litern wurde mit 1 904 g Ammoniumpolyphosphat beschickt, verschlossen und das Mischwerk in Gang gesetzt. Die Drehzahl betrug 240 U/min, und die Mischwerkzeuge brachten das eingebrachte Pulver in lebhafte Bewegung. Über eine Dosiervorrichtung wurden innerhalb von drei Minuten 47,5 g einer 40%igen Lösung eines oligomeren Propylmethoxysiloxans (DYNASYLAN^{®} BSM 166) in 96%igem Ethanol in den Mischraum gegeben. Nach Beendigung der Zugabe des Coatingmittels wurde 30 Minuten gemischt. Anschließend wurde mit der Beheizung des Mischers durch einen Wärmeträgeröl-Thermostaten begonnen. Die Temperatur des Mischguts wurde innerhalb von 30 Minuten auf 80 °C erhöht, wozu eine Heizmanteltemperatur von 85 °C notwendig war. Nach Erreichen einer Mischgut-Temperatur von 80°C wurde die Dosiervorrichtung gegen einen Vakuumanschluß ausgetauscht und der Mischraum auf einen Unterdruck von ca. 400 hPa gebracht. Die abgesaugte Luft wurde durch Kühlfallen geleitet, in denen Ethanol und Wasser kondensierte. Die Unterdruck-Behandlung des Ammoniumpolyphosphats wurde bei 80°C 30 Minuten lang durchgeführt. Danach wurde der Mischer wieder auf Normaldruck gebracht, ohne Heizung noch 30 Minuten weitergemischt und das noch warme (ca. 50°C) Ammoniumpolyphosphat aus dem Mischer entnommen und abgefüllt.

Zur Prüfung des gecoateten Flammschutzmittels wurde wie bei Beispiel 1 das Absinkverhalten in Wasser ermittelt und die Viskosität einer 3:1-Mischung Ammoniumpolyphosphat/Wasser bestimmt. Die Ergebnisse entsprachen denjenigen, die mit dem nach Beispiel 1, Variante mit Ofentrocknung, oberflächenmodifizierten Ammoniumpolyphosphat erhalten wurden.

### Beispiel 3 (nicht erfindungsgemäß)

In den in Beispiel 1 beschriebenen Pflugscharmischer wurden 1 515 g eines Ammoniumorthophosphats (FR CROS^{®} 282) gegeben und bei einer Drehzahl von 200 U/min in lebhafte Bewegung versetzt. Über eine Öffnung im Deckel des Mischers wurden innerhalb von 5 Minuten 15,2 g DYNASYLAN^{®} BSM 166 in den Mischraum gegeben. Nach Beendigung der Zugabe des Coatingmittels wurde 15 Minuten gemischt. Anschließend wurde das Ammoniumphosphat aus dem Mischer entnommen und das gecoatete Material zwei Stunden bei 90 °C in einem Umlufttrockenschrank bei 20 % Frischluftzufuhr getrocknet.

### Beispiel 4 (nicht erfindungsgemäß

In den in Beispiel 1 beschriebenen Pflugscharmischer wurden 1 306 g eines Dimelaminorthophosphats (BUDIT^{®} 310) gegeben und bei einer Drehzahl von 200 U/min in lebhafte Bewegung versetzt. Über eine Öffnung im Deckel des Mischers wurden innerhalb von 4 Minuten 10,4 g DYNASYLAN^{®} BSM 166 in den Mischraum gegeben. Nach Beendigung der Zugabe des Coatingmittels wurde 15 Minuten gemischt. Anschließend wurde das so behandelte Dimelaminorthophosphat aus dem Mischer entnommen und zwei Stunden bei 90 °C in einem Umlufttrockenschrank bei 20 % Frischluftzufuhr getrocknet.

### Beispiel 5 (nicht erfindungsgemäß)

In den in Beispiel 1 beschriebenen Pflugscharmischer wurden 1 522 g eines Melaminborats {BUDIT^{®} 313) gegeben und bei einer Drehzahl von 200 U/min in lebhafte Bewegung versetzt. Über eine Öffnung im Deckel des Mischers wurden innerhalb von 10 Minuten 38,0 g DYNASYLAN^{®} BSM 166 in den Mischraum gegeben. Nach Beendigung der Zugabe des Coatingmittels wurde 15 Minuten gemischt. Anschließend wurde das Melaminborat aus dem Mischer entnommen und das gecoatete Material zwei Stunden bei 90 °C in einem Umlufttrockenschrank bei 20 % Frischluftzufuhr getrocknet.

### Beispiel 6 (nicht erfindungsgemäß)

In den in Beispiel 1 beschriebenen Pflugscharmischer wurden 1 010 g eines Melamincyanurats (BUDIT^{®} 315) gegeben und bei einer Drehzahl von 200 U/min in lebhafte Bewegung versetzt. Über eine Öffnung im Deckel des Mischer-Mischraums wurden innerhalb von 7,5 Minuten 20,2 g DYNASYLAN^{®} BSM 166 in den Mischraum gegeben. Nach Beendigung der Zugabe des Coatingmittels wurde 15 Minuten gemischt. Anschließend wurde das Melamincyanurat aus dem Mischer entnommen und das behandelte Material zwei Stunden bei 90°C in einem Umlufttrockenschrank bei 20 % Frischluftzufuhr getrocknet.

### Beispiel 7 (nicht erfindungsgemäß)

Die in Beispiel 1 beschriebene Methode zur Bestimmung des Absinkverhaltens oberflächenmodifizierter Flammschutzmittel in Wasser (Flotationstest) wurde auf die nach den Beispielen 3 bis 6 erhaltenenen oberflächenbehandelten Flammschutzmittel angewandt. Die Tabelle 3 zeigt die erhaltenen Ergebnisse, die die erzielten Veränderungen der Oberflächeneigenschaften der Flammschutzmittel deutlich machen.

**Tabelle 3**

| Flammschutzmittel | Coating mit DNA-SYLAN^{®} BSM 166 | Aufgegebene Menge in mg | Anteil abgesunkenen Flammschutzmittels in % nach | | | |
|---|---|---|---|---|---|---|
| | | | 15 sec | 60 sec (+ Schütteln) | 5 min | 18 h |
| Ammoniumorthophosphat (FR CROS^{®} 282, Beispiel 3) | ohne | 80 | 100 | 100 | 100 | 100 |
| | 1% | 80 | 5 | 75 | 90 | 90 |
| Dimelaminorthophosphat (BUDIT^{®} 310, Beispiel 4) | ohne | 100 | 65 | 100 | 100 | 100 |
| | 1% | 60 | 0 | < 5 | 5 | 40 |
| Melaminborat (BUDIT^{®} 313, Beispiel 5) | ohne | 150 | 70 | 100 | 100 | 100 |
| | 1% | 130 | 0 | 5 | 20 | 25 |
| Melamincyanurat (BUDIT^{®} 315, Beispiel206) | ohne | 100 | 25 | 85 | 95 | 100 |
| | 1% | 70 | < 5 | 50 | 75 | 85 |

### Beispiel 8 (nicht erfindungsgemäß)

Die nach den Beispielen 1, 3 und 4 oberflächenmodifizierten Flammschutzmittel wurden auf ihre Wasserlöslichkeit untersucht. Dazu wurden jeweils 50 g Flammschutzmittel mit 200 g Wasser 1 Stunde bei 20 °C geschüttelt. Anschließend wurde abfiltriert und der Trockenrückstand der Filtrate bestimmt, vgl. Tabelle 4.

**Tabelle 4**

| | Trockenrückstand | |
|---|---|---|
| Flammschutzmittel | ohne Oberflächenbehandlung | mit Oberflächenbehandlung |
| Ammoniumpolyphosphat (FR CROS^{®} 484) | 0,30 % | 0,25 % |
| Dimelaminorthophosphat (BUDIT^{®} 310) | 0,42 % | 0,29 % |
| Ammoniumorthophosphat (FR CROS^{®} 282) | 10,3% | 5,3% |

Die Ergebnisse in Tabelle 4 zeigen, daß die Wasserlöslichkeit sich durch die Oberflächenbehandlung teilweise erheblich verringert, bei Ammoniumpolyphosphat um 17 %, bei Melaminphosphat um 31 % und beim Ammoniumorthophosphat um 49 %. Mit diesen gecoateten Flammschutzmitteln mit reduzierter Wasserlöslichkeit hergestellte Polymercompounds werden weniger empfindlich gegen die Einwirkung von Wasser sein.

### Beispiel 9 (nicht erfindungsgemäß)

Das nach Beispiel 1, jedoch mit 1 Gew.-% DYNASYLAN^{®} AMEO oberflächenbehandelte Ammoniumpolyphosphat FR CROS^{®} 484 wird in ein wäßriges Textilbehandlungsmittel bestehend aus

| | |
|---|---|
| 75 | Teilen Wasser |
| 150 | Teilen Ammoniumpolyphosphat FR CROS^{®} 484 und |
| 600 | Teilen MOWILlTH^{®} DM 1831 |

gegeben.

Der Einfluß auf den pH-Wert und die Viskosität wurde im Vergleich zu unbehandeltem Material untersucht, vgl. Tabelle 5.

**Tabelle 5**

| | pH-Wert | Löslichkeit % in H₂O | Viskosität Ford Becher Nr. 4 bei Beginn der Lagerung | Viskosität Ford Becher Nr. 4 nach 22 Tagen Lagerung |
|---|---|---|---|---|
| FR CROS^{®} 484, AMEO-behandelt (1 Gew.-%) | 7,20 | 0,08 | 37 sec | 44 sec |
| FR CROS 484, unbehandelt | 5,80 | 0,20 | 88 sec | 93 sec |

Die Verarbeitbarkeit von mit beschichteten Flammschutzmitteln hergestellten Dispersionen wie sie beispielsweise als Intumeszenzfarben verwendet werden, wird aufgrund der Viskositätserniedrigung verbessert und bleibt auch auf längere Zeit erhalten. Die Viskositätserniedrigung ermöglicht auch einen höheren Füllgrad, d. h. mehr Flammschutzmittel im System.

## Patentansprüche

1. Verfahren zur Modifizierung der Oberfläche von Flammschutzmitteln durch Umhüllen der Teilchen mit einem siliciumhaltigen Coatingmittel, indem man ein organofunktionelles Silan oder eine Mischung organofunktioneller Silane oder ein oligomeres Organosiloxan oder eine Mischung oligomerer Organosiloxane oder eine lösemittelhaltige Zubereitung auf der Basis monomerer Organosilane und/oder oligomerer Organosiloxane oder eine Zubereitung auf der Basis wasserlöslicher Organopolysiloxane auf ein pulverförmiges Flammschutzmittel aufbringt und das Flammschutzmittel während des Coatings in Bewegung hält wobei man das Verfahren in strömender Luft oder Inertgas durchführt.

2. Verfahren nach Anspruch 1,
**dadurch gekennzeichnet,**
**daß** man 0,05 bis 10 Gew.-% an siliciumhaltigem Coatingmittel, bezogen auf die Menge an Flammschutzmittel, einsetzt.

3. Verfahren nach Anspruch 1 oder 2,
**dadurch gekennzeichnet,**
**daß** man das Coatingmittel im Laufe von 10 Sekunden bis 2 Stunden bei einer Temperatur von 0 bis 200 °C auf das Flammschutzmittel aufbringt.

4. Verfahren nach einem der Ansprüche 1 bis 3,
**dadurch gekennzeichnet,**
**daß** man das mit Coatingmittel umhüllte Flammschutzmittel unter Wärmeeinwirkung und/oder vermindertem Druck nachbehandelt

5. Verfahren nach Anspruch 4,
**dadurch gekennzeichnet,**
**daß** man das mit Coatingmittel behandelte Flammschutzmittel bei einer Temperatur von 0 bis 200 °C nachbehandelt.

6. Verfahren nach einem der Ansprüche 1 bis 5,
**dadurch gekennzeichnet,**
**daß** man das Coating und gegebenenfalls eine anschließende Trocknung des Flammschutzmittels einmal oder mehrmals wiederholt.

7. Verfahren nach einem der Ansprüche 1 bis 6,
**dadurch gekennzeichnet,**
**daß** man Flammschutzmittel mit einer durchschnittlichen Korngröße (d₅₀-Wert) von 1 bis 100 µm einsetzt.

8. Verfahren nach einem der Ansprüche 1 bis 7,
**dadurch gekennzeichnet,**
**daß** man als Flammschutzmittel Ammoniumorthophosphate, Ammoniumdiphosphate, Ammoniumpolyphosphate, Melaminorthophosphate, Melamindiphosphate, Melaminpolyphosphate, Melaminborate, Melaminoxalate, Melaminphthalate, Melamincyanurat oder Melaminborophosphate einsetzt.

9. Verfahren nach einem der Ansprüche 1 bis 8,
**dadurch gekennzeichnet,**
**daß** man als organofunktionelles Silan ein aminoalkyl- oder epoxyalkyl-oder acryloxyalkyl- oder methacryloxyalkyl.- oder mercaptoalkyl- oder alkenyl- oder alkylfunktionelles Alkoxysilan einsetzt.

10. Verfahren nach einem der Ansprüche 1 bis 8,
**dadurch gekennzeichnet,**
**daß** man ein oligomeres Organosiloxan einsetzt, das als Substituenten (i) Alkyl- und Alkoxy-Gruppen oder (ii) Vinyl- und Alkoxy-Gruppen und gegebenenfalls Alkyl-Gruppen trägt.

11. Verfahren nach mindestens einem der Ansprüche 1 bis 10,
**dadurch gekennzeichnet,**
**daß** man eine lösemittelhaltige Zubereitung auf der Basis monomerer Organosilane und/oder oligomerer Organosiloxane einsetzt, die als Lösemittel Methanol, Ethanol, n-Propanol, Isopropanol und/oder Wasser enthält.

12. Verfahren nach einem der Ansprüche 1 bis 8,
**dadurch gekennzeichnet,**
**daß** man eine Zubereitung auf der Basis wasserlöslicher Organopolysiloxane einsetzt, wobei die Organopolysiloxane neben OH-Gruppen mindestens eine Aminoalkyl-funktionelle Gruppe und gegebenenfalls mindestens eine weitere funktionelle Gruppe aus der Reihe Alkyl, Alkenyl, Glycidetheralkyl, Methacryloxyalkyl, Mercaptoalkyl enthalten und an jedem Siliciumatom der Organosiloxane eine organofunktionelle Gruppe gebunden ist und der durchschnittliche Oligomerisationsgrad der Organosiloxane 2 bis 50 beträgt.

13. Verfahren nach Anspruch 12,
**dadurch gekennzeichnet,**
**daß** man eine wäßrige Zubereitung einsetzt, die einen Gehalt an einem Alkohol von weniger als 0,5 Gew.-%, bezogen auf die gesamte Zubereitung, und einen pH-Wert von 2 bis 6 oder 8 bis 12 aufweist.

14. Oberflächenmodifizierte Flammschutzmittel erhältlich nach den Ansprüchen 1 bis 13.

15. Verwendung oberflächenmodifizierter Flammschutzmittel nach den Ansprüchen 1 bis 14 in Polymeren und Polymercompounds.

16. Verwendung oberflächenmodifizierter Flammschutzmittel nach den Ansprüchen 1 bis 14 zur intumeszierenden Beschichtung brennbarer Materialien.

17. Verwendung oberflächenmodifizierter Flammschutzmittel nach den Ansprüchen 1 bis 14 zur Flammwidrigausstattung brennbarer Naturstoffe.

## Claims

1. Process for modifying the surface of flame retardants by encapsulating the particles with a silicon-containing coating agent, which comprises applying an organofunctional silane or a mixture of organofunctional silanes or an oligomeric organosiloxane or a mixture of oligomeric organosiloxanes or a solvent-containing preparation based on monomeric organosilanes and/or on oligomeric organosiloxanes or a preparation based on water-soluble organopolysiloxanes to a pulverulent flame retardant and keeping the flame retardant in motion during the coating procedure, the process being carried out in a stream of air or inert gas.

2. Process according to Claim 1,
**characterized in that**
the amount of silicon-containing coating agent used is from 0.05 to 10% by weight, based on the amount of flame retardant.

3. Process according to Claim 1 or 2,
**characterized in that**
the coating agent is applied to the flame retardant over a period of from 10 seconds to 2 hours at a temperature of from 0 to 200°C.

4. Process according to one of Claims 1 to 3,
**characterized in that** the flame retardant encapsulated with coating agent is post-treated using exposure to heat and/or to reduced pressure.

5. Process according to Claim 4,
**characterized in that**
the flame retardant treated with coating agent is post-treated at a temperature of from 0 to 200°C.

6. Process according to one of Claims 1 to 5,
**characterized in that**
the coating procedure, and if desired a subsequent drying of the flame retardant, is repeated one or more times.

7. Process according to one of Claims 1 to 6,
**characterized in that**
the flame retardant used has an average particle size (d₅₀) of from 1 to 100 µm.

8. Process according to one of Claims 1 to 7,
**characterized in that**
the flame retardants used are ammonium orthophosphates, ammonium diphosphates, ammonium polyphosphates, melamine orthophosphates, melamine diphosphates, melamine polyphosphates, melamine borates, melamine oxalates, melamine phthalates, melamine cyanurate or melamine borophosphates.

9. Process according to one of Claims 1 to 8,
**characterized in that**
the organofunctional silane used is an alkoxysilane with aminoalkyl or epoxyalkyl or acryloxyalkyl or methacryloxyalkyl or mercaptoalkyl or alkenyl or alkyl functionality.

10. Process according to one of Claims 1 to 8,
**characterized in that**
use is made of an oligomeric organosiloxane with, as substituents, (i) alkyl and alkoxy groups or (ii) vinyl and alkoxy groups and, if desired, alkyl groups.

11. Process according to at least one of Claims 1 to 10,
**characterized in that**
use is made of a solvent-containing preparation based on monomeric organosilanes and/or on oligomeric organosiloxanes, with methanol, ethanol, n-propanol, isopropanol and/or water as solvent.

12. Process according to one of Claims 1 to 8,
**characterized in that**
use is made of a preparation based on water-soluble organopolysiloxanes, where the organopolysiloxanes contain, besides OH groups, at least one group with aminoalkyl functionality and, if desired, at least one other functional group selected from the class consisting of alkyl, alkenyl, glycidic ether alkyl, methacryloxyalkyl and mercaptoalkyl, and an organofunctional group is bonded to each silicon atom of the organosiloxanes and the average degree of oligomerization of the organosiloxanes is from 2 to 50.

13. Process according to Claim 12,
**characterized in that**
use is made of an aqueous preparation which has a content of less than 0.5% by weight of alcohol, based on the entire preparation, and a pH of from 2 to 6 or from 8 to 12.

14. Surface-modified flame retardants obtainable according to Claims 1 to 13.

15. Use of surface-modified flame retardants according to Claims 1 to 14 in polymers and polymer compounds.

16. Use of surface-modified flame retardants according to Claims 1 to 14 for the intumescent coating of combustible materials.

17. Use of surface-modified flame retardants according to Claims 1 to 14 for providing flame retardancy for combustible naturally occurring materials.

## Revendications

1. Procédé destiné à modifier la surface d'agents ignifuges en enrobant les particules avec un agent de revêtement contenant du silicium, réalisé en appliquant un silane organofonctionnel ou un mélange de silanes organofonctionnels ou un organosiloxane oligomère ou un mélange d'organosiloxanes oligomères ou une préparation contenant des solvants et étant réalisée à base d'organosilanes monomères et/ou d'organosiloxanes oligomères ou une préparation à base d'organopolysiloxanes hydrosolubles, sur un agent ignifuge en poudre et en maintenant l'agent ignifuge en mouvement durant le processus de revêtement, ledit procédé étant mis en oeuvre dans un flux d'air ou de gaz inerte.

2. Procédé selon la revendication 1,
**caractérisé en ce**
**que** l'on met en oeuvre, par rapport à la quantité d'agent ignifuge, 0,05 à 10 % en poids de l'agent de revêtement.

3. Procédé selon les revendications 1 ou 2,
**caractérisé en ce**
**que** l'agent de revêtement est appliqué sur l'agent ignifuge pendant une durée comprise entre 10 secondes et 2 heures à une température comprise entre 0 et 200°C.

4. Procédé selon l'une des revendications 1 à 3,
**caractérisé en ce**
**que** l'on soumet l'agent ignifuge enrobé de l'agent de revêtement à un traitement ultérieur impliquant l'action de la chaleur et/ou une pression réduite.

5. Procédé selon la revendication 4,
**caractérisé en ce**
**que** l'agent ignifuge traité avec l'agent de revêtement subit un traitement ultérieur à une température comprise entre 0 et 200°C.

6. Procédé selon l'une des revendications 1 à 5,
**caractérisé en ce**
**que** le processus de revêtement de l'agent ignifuge, le cas échéant suivi d'un séchage, est répété une ou plusieurs fois.

7. Procédé selon l'une des revendications 1 à 6,
**caractérisé en ce**
**que** l'on met en oeuvre des agents ignifuges présentant une granulométrie moyenne (valeur d₅₀) comprise entre 1 et 100 µm.

8. Procédé selon l'une des revendications 1 à 7,
**caractérisé en ce**
**que** l'on met en oeuvre, en tant qu'agents ignifuges, des orthophosphates d'ammonium, des diphosphates d'ammonium, des polyphosphates d'ammonium, des orthophosphates de mélamine, des diphosphates de mélamine, des polyphosphates de mélamine, des borates de mélamine, des oxalates de mélamine, des phtalates de mélamine, des cyanurates de mélamine ou des borophosphates de mélamine.

9. Procédé selon l'une des revendications 1 à 8,
**caractérisé en ce**
**que** l'on met en oeuvre, en tant que silane organofonctionnel, un alcoxysilane aux fonctions aminoalkyle ou époxyalkyle ou acryloxyalkyle, ou méthacryloxyalkyle ou mercaptoalkyle ou alcényle ou alkyle.

10. Procédé selon l'une des revendications 1 à 8,
**caractérisé en ce**
**que** l'on met en oeuvre un organosiloxane oligomère qui porte comme substituants des groupes (i) alkyle et alcoxy ou (ii) des groupes vinyle et alcoxy et, le cas échéant, des groupes alkyle.

11. Procédé selon au moins une des revendications 1 à 10,
**caractérisé en ce**
**que** l'on met en oeuvre une préparation contenant des solvants et étant réalisée à base d'organosilanes monomères et/ou d'organosiloxanes que solvants du méthanol, de l'éthanol, du n-propanol, de l'isopropanol et/ou de l'eau.

12. Procédé selon l'une des revendications 1 à 8,
**caractérisé en ce**
**que** l'on met en oeuvre une préparation à base d'organopolysiloxanes hydrosolubles, lesdits organopolysiloxanes contenant, outre les groupes OH, au moins un groupe fonctionnel aminoalkyle et, le cas échéant, au moins un autre groupe fonctionnel issu de la série alkyle, alcényle, glycide-éther-alkyle, méthacryloxyalkyle, mercaptoalkyle, un groupe organofonctionnel étant en liaison avec chaque atome de silicium des organosiloxanes et la moyenne du degré d'oligomérisation des organosiloxanes étant comprise entre 2 et 50.

13. Procédé selon la revendication 12,
**caractérisé en ce**
**que** l'on met en oeuvre une préparation aqueuse présentant, par rapport à l'intégralité de la préparation, une teneur en un alcool inférieure à 0,5 % en poids et un pH compris entre 2 et 6 ou entre 8 et 12.

14. Agents ignifuges présentant une surface modifiée et pouvant être obtenus selon les revendications 1 à 13.

15. Utilisation d'agents ignifuges présentant une surface modifiée selon les revendications 1 à 14 dans des polymères et des compounds de polymères.

16. Utilisation d'agents ignifuges présentant une surface modifiée selon les revendications 1 à 14 pour pourvoir des matériaux combustibles d'un revêtement intumescent.

17. Utilisation d'agents ignifuges présentant une surface modifiée selon les revendications 1 à 14 pour ignifuger des matériaux naturels combustibles.
